# EUROPÄISCHE PATENTSCHRIFT

(11) **EP 3 710 704 B1**
(45) Veröffentlichungstag und Bekanntmachung des Hinweises auf die Patenterteilung: **31.05.2023**
(21) Anmeldenummer: 18803393.0
(22) Anmeldetag: 12.11.2018
(51) Int. Cl.: F04D 1/02, F04D 13/02, F04D 3/02, F04D 29/041, F04D 29/18

(54) **PUMPENANORDNUNG ZUR VERSORGUNG EINER GLEITRINGDICHTUNGSANORDNUNG**
PUMP ASSEMBLY FOR SUPPLYING A MECHANICAL SEAL ASSEMBLY
DISPOSITIF DE POMPAGE POUR L'ALIMENTATION D'UNE GARNITURE MÉCANIQUE D'ETANCHÉITÉ

(30) Priorität: 16.11.2017 DE 102017220437
(43) Veröffentlichungstag der Anmeldung: 23.09.2020
(73) Patentinhaber: EagleBurgmann Germany GmbH & Co. KG, 82515 Wolfratshausen (DE)
(72) Erfinder: BAREIS, Markus, 86946 Pflugdorf (DE); EISFELD, Christian, 82515 Wolfratshausen (DE); ERTL, Martin, 82541 Holzhausen (DE); KARNER, Christoph, 82538 Geretsried / Gelting (DE); SCHERER, Hans-georg, 82538 Geretsried (DE); SCHULTEN, Berthold, 82538 Geretsried (DE)
(74) Vertreter: Hoefer & Partner Patentanwälte mbB
(86) Internationale Anmeldenummer: PCT/EP2018/080911
(87) Internationale Veröffentlichungsnummer: WO 2019/096729

(56) Entgegenhaltungen:
- DE-B- 1 165 144
- DE-U1-202006 011 223
- FR-A1- 2 672 344
- US-A- 367 564
- US-A- 3 614 181
- US-A- 4 080 112
- US-A1- 2009 306 771

## Beschreibung

Die Erfindung betrifft eine Gleitringdichtungsanordnung mit einer Pumpenanordnung zur Versorgung der Gleitringdichtungsanordnung mit einem Fluid, welches zum Dichtspalt zwischen Gleitringen der Gleitringdichtung geführt wird. Ferner betrifft die vorliegende Erfindung eine Gleitringdichtungsanordnung mit einer derartigen Pumpenanordnung. Gleitringdichtungsanordnungen sind aus dem Stand der Technik in unterschiedlichen Ausgestaltungen bekannt. Hierbei wird ein gasförmiges oder flüssiges Sperrmedium verwendet, welches in den Dichtspalt an den Gleitflächen zwischen einem rotierenden Gleitring und einem stationären Gleitring zugeführt wird. Hierbei kann grundsätzlich jede Art von Pumpe zur Förderung des Sperrmediums verwendet werden, da üblicherweise nur ein geringer Differenzdruck zwischen dem Druck des abzudichtenden Produkts und dem Druck des Sperrmediums vorhanden ist, um eine Leckage über den Dichtspalt der Gleitringdichtungsanordnung möglichst gering zu halten. Hierbei wurden bisher Kolbenpumpen oder Zahnradpumpen zur Druckerzeugung des Sperrmediums verwendet. Bei höheren Differenzdrücken zwischen dem Sperrmedium und dem abzudichtenden Produkt wird bisher einfach eine redundante Anordnung mit einer zweiten Pumpe vorgenommen. Dies führt jedoch zu unverhältnismäßig hohen Kosten für die gesamte Sperrmedium-Anlage. Die US 367,564 A offenbart eine Pumpe mit zwei Axialpumpen und einer Fluidabströmung in Radialrichtung. Die DE 20 2006 011 223 U1 offenbart eine Sperrfluidvorlage mit einer Leckageüberwachung. Aus der US 3,614,181 A ist ein Axialschubausgleich eines Lagers bekannt. Weiterer relevanter Stand der Technik ist offenbart in Dokumenten DE 11 65 144 B und FR 2 672 344 A1.

Es ist daher Aufgabe der vorliegenden Erfindung, eine Gleitringdichtungsanordnung mit einer Pumpenanordnung bereitzustellen, welche bei einfachem Aufbau und einfacher, kostengünstiger Herstellbarkeit auch höhere Drücke erzeugen kann.

Diese Aufgabe wird durch eine Gleitringdichtungsanordnung mit den Merkmalen des Anspruchs 1 gelöst. Die Unteransprüche zeigen bevorzugte Weiterbildungen der Erfindung. Die erfindungsgemäße Gleitringdichtungsanordnung mit einer Pumpenanordnung zum Zuführen eines Fluids zu einer Gleitringdichtung weist den Vorteil auf, dass ein besonders kompakter Aufbau der Pumpenanordnung möglich ist. Hierbei können mehrere Pumpstufen in der Pumpenanordnung integriert werden. Die Gleitringdichtungsanordnung umfasst wenigstens eine erste Gleitringdichtung mit einem rotierenden und einem stationären Gleitring, welche zwischen ihren Gleitflächen einen Dichtspalt definieren. Die Pumpenanordnung umfasst dabei genau einen Antrieb mit einer Antriebswelle, eine erste und eine zweite Axialpumpe sowie eine Radialpumpe. Somit sind insgesamt drei Pumpen vorgesehen, wobei die erste und zweite Axialpumpe das Fluid in Axialrichtung der Antriebswelle fördern und die Radialpumpe das Fluid in Radialrichtung der Antriebswelle fördert. Dabei sind die erste und zweite Axialpumpe in Durchströmungsrichtung des Fluids durch die Pumpenanordnung vor der Radialpumpe angeordnet. Dabei treibt der einzige Antrieb gleichzeitig sowohl die erste und zweite Axialpumpe als auch die Radialpumpe an. Somit ist nur ein gemeinsamer Antrieb für alle drei Pumpstufen vorgesehen. Hierdurch kann ein besonders einfacher und kostengünstiger Aufbau einer kompakten Pumpanordnung bereitgestellt werden.

Weiter umfasst die Pumpenanordnung eine Magnetkupplung mit einem Antriebsteil mit einem ersten Permanentmagneten, einem feststehenden Hohlzylinder und einem Abtriebsteil mit einem zweiten Permanentmagneten. Der Hohlzylinder ist dabei zwischen dem Antriebsteil und dem Abtriebsteil angeordnet und beispielsweise mit einem Pumpengehäuse verbunden. Durch diese Ausgestaltung mit einer Magnetkupplung ist eine einfache Trennung zwischen dem Fluid und der Atmosphäre möglich. Somit können Verunreinigungen des Fluids der Gleitringdichtungsanordnung von außen vermieden werden.

Weiter sind die ersten Permanentmagneten in Richtung einer Mittelachse der Antriebswelle um einen Abstand A versetzt zu den zweiten Permanentmagneten am Abtriebsteil. Dadurch ergibt sich nur eine teilweise Überlappung zwischen den ersten und zweiten Permanentmagneten. Die ersten und zweiten Permanentmagnete sind dabei in Axialrichtung vorzugsweise gleich lang.

Vorzugsweise ist der Antriebsteil der Magnetkupplung die Antriebswelle des Antriebs der Pumpenanordnung. Dadurch kann eine Bauteileanzahl reduziert werden und ein noch kompakterer Aufbau realisiert werden.

Erfindungsgemäß ist der Aufbau der Pumpenanordnung derart, dass die erste Axialpumpe in eine erste Axialrichtung fördert und die zweite Axialpumpe in eine zweite Axialrichtung fördert, die entgegengesetzt zur ersten Axialrichtung ist. Hierdurch kann ein Ausgleich der auf die Pumpenanordnung wirkenden Axialkräfte durch die erste und zweite Axialpumpe erreicht werden. Dabei ist der Aufbau vorzugsweise derart, dass die gegeneinander wirkenden Axialkräfte sich vollständig aufheben. Vorzugsweise sind dabei der Aufbau der ersten und zweiten Axialpumpe identisch.

Ein besonders einfacher und kompakter Aufbau ergibt sich, wenn die erste und zweite Axialpumpe und die Radialpumpe direkt am Abtriebsteil der Magnetkupplung angeordnet sind.

Erfindungsgemäß sind die erste und zweite Axialpumpe eine Fördergewindepumpe. Vorzugsweise ist hierbei ein Fördergewinde sowohl am rotierenden als auch am stationären Teil angeordnet. Alternativ ist ein Fördergewinde nur an einem Teil, d.h., entweder dem rotierenden Teil oder dem stationären Teil, angeordnet. Besonders bevorzugt sind die Fördergewindepumpen in Axialrichtung gleich lang.

Gemäß einer weiteren bevorzugten Ausgestaltung der Erfindung umfasst die Pumpenanordnung bevorzugt ein einteiliges Pumpengehäuse mit einem Zulauf und einem Ablauf. Das einteilige Pumpengehäuse ermöglicht eine Ausgestaltung derart, dass die erste und zweite Axialpumpe und die Radialpumpe als vormontierte Baugruppe vorgesehen werden können und einfach in das einteilige Pumpengehäuse eingeschoben werden können. Vorzugsweise ist dabei eine Zulaufrichtung zum Zulauf der Pumpenanordnung und eine Ablaufrichtung im Ablauf der Pumpenanordnung gleich. Hierdurch werden Verluste durch Umlenken der Strömung minimiert.

Vorzugsweise umfasst die Pumpenanordnung ferner einen Fluidstromteiler, welcher einen zugeführten Fluidstrom in zwei Unterströme unterteilt. Hierbei führt ein erster Unterstrom zur ersten Axialpumpe und ein zweiter Unterstrom führt zur zweiten Axialpumpe. Der Fluidstromteiler ist vorzugsweise unmittelbar nach dem Zulauf im Pumpengehäuse angeordnet.

Bevorzugt umfasst die Pumpenanordnung ferner eine Steuereinheit, welche eingerichtet ist, eine Antriebsdrehzahl des einzigen Antriebs zu steuern, um dadurch eine Fördermenge der Pumpenanordnung zu steuern.

Erfindungsgemäß umfasst die Pumpenanordnung ein erstes und ein zweites Radiallager, um das Abtriebsteil am Hohlzylinder zu lagern. Vorzugsweise dient hierbei das Fluid auch als Schmiermedium für das erste und zweite Radiallager. Erfindungsgemäß ist lediglich ein einziges Axiallager vorgesehen, besonders bevorzugt benachbart zu einem der Radiallager, um eine axiale Lagerung des Abtriebsteils der Magnetkupplung zu realisieren. Dies ist möglich, da die ersten und zweiten Permanentmagnete der Magnetkupplung in Axialrichtung versetzt zueinander angeordnet sind, so dass durch die Anordnung der Permanentmagnete eine Axialkraft nur in eine Richtung zwischen dem Antriebsteil und dem Abtriebsteil vorhanden ist.

Die Gleitringdichtungsanordnung ist vorzugsweise als Tandembauweise, umfassend eine erste und eine zweite Gleitringdichtung in Reihe, ausgelegt. Fluid wird bei der

Tandembauweise in einem Raum zwischen der ersten und zweiten Gleitringdichtung zugeführt.

Nachfolgend wird ein bevorzugtes Ausführungsbeispiel der Erfindung unter Bezugnahme auf die begleitende Zeichnung im Detail beschrieben. In der Zeichnung ist:
- Fig. 1: eine schematische Ansicht einer Gleitringdichtungsanordnung mit einer Pumpenanordnung gemäß einem bevorzugten Ausführungsbeispiel der Erfindung, und
- Fig. 2: eine Schnittansicht, welche die Pumpenanordnung von Fig. 1 im Detail zeigt.

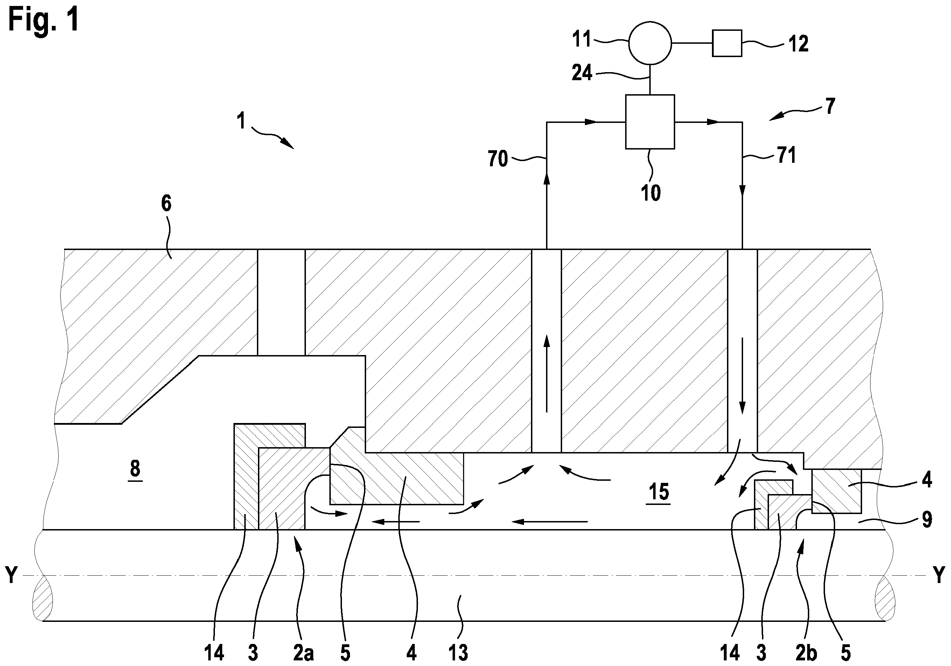

Wie aus Fig. 1 ersichtlich ist, umfasst die Gleitringdichtungsanordnung 1 eine erste Gleitringdichtung 2a und eine zweite Gleitringdichtung 2b, um eine Produktseite 8 mit einem abzudichtenden Produkt von einer Atmosphärenseite 9 abzudichten. Hierbei ist eine Tandem-Anordnung gezeigt, bei der die beiden Gleitringdichtungen 2a, 2b in Richtung einer Wellenmittelachse Y-Y in Reihe an einer gemeinsamen Welle 13 abdichten.

Zum Betrieb der beiden Gleitringdichtungen 2a, 2b ist ein Fluidkreislauf 7 angeordnet, welcher ein Fluid bzw. ein Sperrmedium, beispielsweise ein flüssiges Öl oder dgl., verwendet.

Die erste und zweite Gleitringdichtung 2a, 2b sind in diesem Ausführungsbeispiel gleich aufgebaut und umfassen jeweils einen rotierenden Gleitring 3 und einen stationären Gleitring 4, welche zwischen ihren Gleitflächen einen Dichtspalt 5 definieren. Die rotierenden Gleitringe 3 sind mittels eines hülsenförmigen Halteelements 14 auf der Welle 13 fixiert. Die stationären Gleitringe 4 sind auf übliche Weise in einem Dichtungsgehäuse 6 fixiert.

Wie aus Fig. 1 ersichtlich ist, umfasst der Fluidkreislauf 7 eine Saugleitung 70 und eine Druckleitung 71. Im Fluidkreislauf 7 ist ferner eine Pumpenanordnung 10 angeordnet, um das Fluid in einem geschlossenen Kreislauf umzupumpen. Die Pumpenanordnung 10 umfasst einen einzigen Antrieb 11, welcher mittels einer Steuereinheit 12 angesteuert wird.

Wie aus Fig. 1 ersichtlich ist, führt der Fluidkreislauf 7 zu einem Raum 15 zwischen der ersten Gleitringdichtung 2a und der zweiten Gleitringdichtung 2b. Das Fluid wird hierbei in die Nähe der Dichtspalte 5 zugeführt, um eine Abdichtung an den Dichtspalten 5 zu gewährleisten. Hierbei ist ein Druck des Fluids etwas größer als ein Druck des Produkts an der Produktseite 8. Somit wird eine Leckage des Produkts in Richtung zur Atmosphärenseite 9 vermieden.

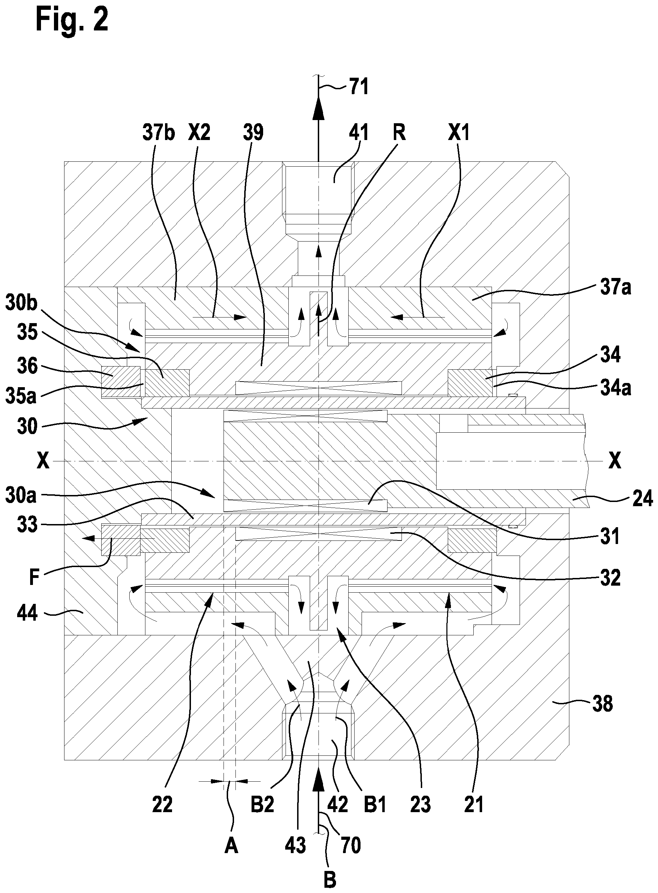

Die Pumpenanordnung 10 ist im Detail aus Fig. 2 ersichtlich. Wie in Fig. 2 dargestellt, umfasst die Pumpenanordnung 10 eine erste Axialpumpe 21, eine zweite Axialpumpe 22 und eine Radialpumpe 23. Die erste und zweite Axialpumpe 21, 22 sind als Fördergewindepumpen ausgebildet, wobei ein Fördergewinde sowohl an dem rotierenden Teil als auch am stationären Teil der beiden Axialpumpen 21, 22 vorgesehen ist.

Die erste und zweite Axialpumpe 21, 22 sind gleich aufgebaut, wobei eine Förderrichtung der ersten Axialpumpe in einer ersten Axialrichtung X1 ist und die Förderrichtung der zweiten Axialpumpe in eine entgegengesetzte Axialrichtung X2 ist.

Wie weiter aus Fig. 2 ersichtlich ist, ist in Axialrichtung X-X der Pumpenanordnung die Radialpumpe 23 zwischen der ersten und zweiten Axialpumpe 21, 22 angeordnet. Die Radialpumpe 23 fördert das Fluid in Radialrichtung R.

Wie weiter aus Fig. 2 ersichtlich ist, umfasst die Pumpenanordnung 10 eine Magnetkupplung 30. Die Magnetkupplung 30 ist zwischen dem Antrieb 11 und den beiden Axialpumpen 21, 22 sowie der Radialpumpe 23 angeordnet. Die Magnetkupplung dient dabei zur Übertragung eines Antriebsmoments auf die drei Pumpstufen der Pumpenanordnung 10.

Wie in Fig. 2 gezeigt, umfasst die Magnetkupplung 30 eine Vielzahl von ersten Permanentmagneten 31 und eine Vielzahl von zweiten Permanentmagneten 32. Zwischen den Permanentmagneten 31, 32 ist ein feststehender Hohlzylinder 33 angeordnet. Der Hohlzylinder 33 ist mit einem Pumpengehäuse 38 verbunden. Die Magnetkupplung 30 ermöglicht somit eine Medientrennung zwischen dem Fluid und der Atmosphäre.

Die Magnetkupplung 30 umfasst ein Antreibsteil 30a und ein Abtriebsteil 30b. Der Antriebsteil 30a umfasst eine Antriebswelle 24 des Antriebs 11 sowie die ersten Permanentmagnete 31. Das Abtriebsteil 30b umfasst die zweiten Permanentmagnete 32 sowie eine Rotationshülse 39. Die zweiten Permanentmagnete 32 sind dabei an der Rotationshülse 39 angeordnet.

Weiterhin sind am äußeren Umfang der Rotationshülse 39 zwei feststehende Hülsen 37a, 37b angeordnet. Hierbei sind die Axialpumpen 21, 22 in Form von Fördergewinden zwischen den feststehenden Hülsen 37a, 37b und der Rotationshülse 39 ausgebildet. Zwischen den beiden feststehenden Hülsen 37a, 37b ist die Radialpumpe 23 angeordnet. Die Radialpumpe ist in Fig. 2 nur schematisch dargestellt und kann eine Vielzahl von Flügeln oder dgl. umfassen, um das Sperrmedium in Radialrichtung R zur Mittelachse in einen im Pumpengehäuse 38 gebildeten Ablauf 41 zu pumpen.

Im Pumpengehäuse 38 ist ferner noch ein Zulauf 42 vorgesehen, wobei eine Zulaufrichtung im Zulauf 42 gleich einer Ablaufrichtung im Ablauf 41 ist, nämlich radial. Wie in Fig. 2 dargestellt, liegen der Zulauf 42 und der Ablauf 41 auch auf einer gemeinsamen Achse senkrecht zur Axialrichtung X-X.

Zur Lagerung der Rotationshülse 39 ist ein erstes Radiallager 34 und ein zweites Radiallager 35 vorgesehen. Hierbei erfolgt eine Radiallagerung der Rotationshülse 39 gegenüber dem Hohlzylinder 33. Wie in Fig. 2 gezeigt, sind hierbei Nuten 34a und 35a an Stirnseiten der beiden Radiallager 34 und 35 vorgesehen, um Fluid als Schmiermittel für die Radiallager zu den Lagerflächen zuzuführen. Ferner ist genau ein Axiallager 36 vorgesehen, welches benachbart zum zweiten Radiallager 35 angeordnet ist.

Das Axiallager 36 ist in einem Verschlusselement 44, welche das Pumpengehäuse 38 verschließt, angeordnet.

Wie ferner in Fig. 2 gezeigt, ist eine Anordnung der ersten Permanentmagnete 31 in Axialrichtung versetzt zu einer Anordnung der zweiten Permanentmagnete 32. Hierbei sind die ersten Permanentmagnete 31 um einen Abstand A in Axialrichtung X-X versetzt zu den zweiten Permanentmagneten 32. Dadurch wird eine axiale Vorspannung der Rotationshülse 39 durch die Magnetkräfte ausgeführt, so dass nur genau ein Axiallager 36 notwendig ist.

Die Funktion der Pumpenanordnung 10 ist dabei wie folgt. Wenn der Antrieb 11 durch die Steuereinheit 12 angetrieben wird, dreht sich die Antriebswelle 24 und damit auch die ersten Permanentmagnete 31. Aufgrund der Magnetkräfte, welche auf die zweiten Permanentmagnete 32 wirken, beginnt sich die Rotationshülse 39 ebenfalls zu drehen. Hierdurch erfolgt eine Ansaugung des Fluids über den Zulauf 42 zu einem Fluidstromteiler 43. Wie in Fig. 2 durch die Pfeile angedeutet, unterteilt sich der Fluidstrom B in einen ersten Unterstrom B1 zur ersten Axialpumpe 21 und einen zweiten Unterstrom B2 zur zweiten Axialpumpe 22. Das Fluid strömt dann, wie durch die weiteren Pfeile in Fig. 2 angedeutet, vom Fluidstromteiler 43 nach links und rechts und wird um 180° umgekehrt und strömt dann in die erste und zweite Axialpumpe 21, 22. Am Austritt der ersten und zweiten Axialpumpe 21, 22 ist dann die Radialpumpe 23 angeordnet, welche eine Umlenkung des Fluids um 90° und eine Förderung in den Ablauf 41 ausführt.

Das Fluid wird somit durch die beiden Axialpumpen 21, 22 zu der zwischen den beiden Axialpumpen 21, 22 angeordneten Radialpumpe 23 gefördert. Die Radialpumpe führt dann zu einer Umlenkung des axial zugeführten Fluids in Radialrichtung R und fördert das Fluid über den Ablauf 41 in die Druckleitung 71 und somit in Richtung zu den Gleitringdichtungen 2a, 2b (vgl. Fig. 1).

Somit sind in einer Pumpenanordnung drei Pumpstufen integriert, wobei zwei Axialpumpstufen und eine Radialpumpstufe vorgesehen sind. Die beiden Axialpumpstufen sind hierbei gegenläufig und als Fördergewinde ausgebildet. Durch die gegenläufige Anordnung der ersten und zweiten Axialpumpe 21, 22 können die bei der Förderung auftretenden Axialkräfte aufgehoben werden. Weiterhin stellt die in Axialrichtung X-X versetzte Anordnung der ersten Permanentmagnete 31 relativ zu den zweiten Permanentmagneten 32 sicher, dass kontinuierlich eine Vorspannkraft F auf das einzige Axiallager 36 ausgeübt wird. Durch die Anordnung ist diese Vorspannkraft F dabei unabhängig von einer Drehzahl und unabhängig von einer Viskosität des Fluids.

Die erfindungsgemäße Pumpenanordnung 10 ist dabei sehr kompakt und robust und insbesondere auch für hohe Drücke bis zu 200 x 10⁵ Pa ausgelegt. Wenn die beiden Axialpumpen 21, 22 als Fördergewinde ausgebildet sind und ein geschlossener Kreislauf des Fluids vorhanden ist, müssen keine weiteren Sicherheitssysteme bzw. Dichtungssysteme vorgesehen werden. Darüber hinaus stellen die als Fördergewinde ausgebildeten ersten und zweiten Axialpumpen sowie die Radialpumpe sicher, dass eine geringe Reibung innerhalb des Fluids während des Betriebs auftritt, so dass sich hier auch nur eine geringe Wärmeentwicklung ergibt. Ein weiterer großer Vorteil der erfindungsgemäßen Pumpenanordnung 10 liegt darin, dass eine Regelung einer Menge des gepumpten Fluids nur von der Drehzahl des Antriebs abhängt und so einfach mittels der Steuereinheit 12 realisiert werden kann. Durch das einteilige, im Schnitt U-förmige Pumpengehäuse 38 ist ferner die Realisierung einer einfach zu montierenden Baugruppe möglich. Alternativ kann das Pumpengehäuse auch mehrteilig vorgesehen werden.

Durch die Verwendung von Fördergewinden als erste und zweite Axialpumpe 21, 22 kann ferner bei einem Ausfall der Pumpenanordnung sichergestellt werden, dass bis zu einem vollständigen Herunterfahren einer Anlage die Zirkulation des Fluids sichergestellt ist.

### Bezugszeichenliste

- 1: Gleitringdichtungsanordnung
- 2a: erste Gleitringdichtung
- 2b: zweite Gleitringdichtung
- 3: rotierender Gleitring
- 4: stationärer Gleitring
- 5: Dichtspalt
- 6: Dichtungsgehäuse
- 7: Fluidkreislauf
- 8: Produktseite
- 9: Atmosphärenseite
- 10: Pumpenanordnung
- 11: Antrieb
- 12: Steuereinheit
- 13: Welle
- 14: Halteelement für den rotierenden Gleitring
- 15: Raum
- 21: erste Axialpumpe
- 22: zweite Axialpumpe
- 23: Radialpumpe
- 24: Antriebswelle
- 30: Magnetkupplung
- 30a: Antriebsteil
- 30b: Abtriebsteil
- 31: erste Permanentmagnete
- 32: zweite Permanentmagnete
- 33: feststehender Hohlzylinder
- 34: erste Radialdichtung
- 34a: Nut
- 35: zweite Radialdichtung
- 35a: Nut
- 36: Axiallager
- 37a: feststehende Hülse
- 37b: feststehende Hülse
- 38: Pumpengehäuse
- 39: Rotationshülse
- 41: Ablauf
- 42: Zulauf
- 43: Fluidstromteiler
- 44: Verschlusselement
- 70: Saugleitung
- 71: Druckleitung
- A: Abstand
- B: Durchströmungsrichtung der Pumpenanordnung
- B1, B2: erster und zweiter Unterstrom in der Pumpenanordnung
- F: Vorspannkraft
- R: Radialrichtung
- X1: erste Axialrichtung
- X2: zweite Axialrichtung
- X-X: Axialrichtung (Mittelachse) der Pumpenanordnung
- Y-Y: Wellenmittelachse

## Patentansprüche

1. Gleitringdichtungsanordnung, umfassend eine Gleitringdichtung (2a, 2b) mit einem rotierenden Gleitring (3) und einem stationären Gleitring (4), welche an einander gegenüberliegenden Gleitflächen einen Dichtspalt (5) definieren, und einen Fluidkreislauf (7) mit einer Pumpenanordnung (10) zum Zuführen eines Fluids zur Gleitringdichtung (2a, 2b), umfassend:
- genau einen Antrieb (11) mit einer Antriebswelle (24),
- eine erste Axialpumpe (21), welche das Fluid in Axialrichtung (X-X) der Antriebswelle fördert,
- eine zweite Axialpumpe (22), welche das Fluid in Axialrichtung der Antriebswelle fördert und
- eine Radialpumpe (23), welche das Fluid in Radialrichtung (R) der Antriebswelle fördert,
- wobei die erste Axialpumpe (21) und die zweite Axialpumpe (22) in Durchströmungsrichtung (B) des Fluids durch die Pumpenanordnung vor der Radialpumpe (23) angeordnet sind, und
- wobei der Antrieb (11) die erste Axialpumpe (21), die zweite Axialpumpe (22) und die Radialpumpe (23) gleichzeitig antreibt, und
- ferner umfassend eine Magnetkupplung (30) mit einem Antriebsteil (30a) mit ersten Permanentmagneten (31), einem feststehenden Hohlzylinder (33) und einem Abtriebsteil (30b) mit zweiten Permanentmagneten (32),
- wobei die ersten Permanentmagneten (31) in Axialrichtung (X-X) der Antriebswelle (24) um einen Abstand (A) zu den zweiten Permanentmagneten (32) versetzt sind, wobei die ersten Permanentmagnete die zweiten Permanentmagnete in Radialrichtung (R) teilweise überlappen,
- wobei die erste Axialpumpe (21) das Fluid in eine erste Axialrichtung (X1) fördert und die zweite Axialpumpe (22) das Fluid in eine zweite Axialrichtung (X2) fördert, welche entgegengesetzt zur ersten Axialrichtung (X1) ist,
- wobei die erste Axialpumpe (21) und die zweite Axialpumpe (22) als Fördergewindepumpen ausgebildet sind, und
- wobei das Abtriebsteil (30b) ein erstes Radiallager (34) und ein zweites Radiallager (35) umfasst und
- wobei die Pumpenanordnung (10) genau ein Axiallager (36) zur Axiallagerung des Abtriebsteils (30b) umfasst.

2. Gleitringdichtungsanordnung nach Anspruch 1, wobei der Antriebsteil (30a) die Antriebswelle (24) des Antriebs umfasst.

3. Gleitringdichtungsanordnung nach einem der vorhergehenden Ansprüche, wobei die erste Axialpumpe (21), die zweite Axialpumpe (22) und die Radialpumpe (23) direkt am Abtriebsteil (30b) der Magnetkupplung angeordnet sind.

4. Gleitringdichtungsanordnung nach einem der vorhergehenden Ansprüche, ferner umfassend ein einteiliges Pumpengehäuse (38), welches einen Zulauf (42) und einen Ablauf (41) aufweist.

5. Gleitringdichtungsanordnung nach Anspruch 4, wobei eine Zulaufrichtung in den Zulauf (42) gleich einer Ablaufrichtung in den Ablauf (41) ist.

6. Gleitringdichtungsanordnung nach einem der vorhergehenden Ansprüche, ferner umfassend einen Fluidstromteiler (43), welcher den zugeführten Fluidstrom in zwei Unterströme (B1, B2) unterteilt, wobei der erste Unterstrom (B1) zur ersten Axialpumpe (21) strömt und der zweite Unterstrom (B2) zur zweiten Axialpumpe (22) strömt.

7. Gleitringdichtungsanordnung nach einem der vorhergehenden Ansprüche, wobei das Abtriebsteil (30b) eine Rotationshülse (39) aufweist, an welcher die erste Axialpumpe (21), die zweite Axialpumpe (22), die Radialpumpe (23) und die zweiten Permanentmagnete (32) angeordnet sind.

8. Gleitringdichtungsanordnung nach einem der vorhergehenden Ansprüche, ferner umfassend eine Steuereinheit (12), welche eingerichtet ist, eine Antriebsdrehzahl des Antriebs (11) zu steuern, um dadurch eine Fördermenge der Pumpenanordnung (10) zu bestimmen.

9. Gleitringdichtungsanordnung nach einem der vorhergehenden Ansprüche, umfassend eine erste Gleitringdichtung (2a) und eine zweite Gleitringdichtung (2b), welche in Reihe angeordnet sind, wobei Sperrmedium in einen Raum (15) zwischen der ersten und zweiten Gleitringdichtung zugeführt wird.

## Claims

1. A mechanical seal assembly, comprising a mechanical seal (2a, 2b) comprising a rotating slide ring (3) and a stationary slide ring (4), defining a sealing gap (5) at sliding surfaces which are opposite to each other, and a fluid circuit (7) comprising a pump assembly for supplying a fluid to the mechanical seal (2a, 2b), comprising:
- exactly one drive (11) comprising a drive shaft (24),
- a first axial pump (21), which conveys the fluid in the axial direction (X-X) of the drive shaft,
- a second axial pump (22), which conveys the fluid in the axial direction of the drive shaft and
- a radial pump (23), which conveys the fluid in the radial direction (R) of the drive shaft,
- wherein the first axial pump (21) and the second axial pump (22), in flow-through direction (B) of the fluid across the pump assembly, are arranged in front of the radial pump (23), and
- wherein the drive (11) simultaneously drives the first axial pump (21), the second axial pump (22) and the radial pump (23), and
- further comprising a magnetic coupling (30) comprising an input part (30a) having first permanent magnets (31), a fixed hollow cylinder (33) and an output part (30b) having second permanent magnets (32),
- wherein the first permanent magnets (31), in the axial direction (X-X) of the drive shaft (24), are offset by a distance (A) in relation to the second permanent magnets (32), wherein the first permanent magnets partially overlap the second permanent magnets in the radial direction (R),
- wherein the first axial pump (21) conveys the fluid in a first axial direction (X1) and the second axial pump (22) conveys the fluid in a second axial direction (X2), which is opposite to the first axial direction (X1),
- wherein the first axial pump (21) and the second axial pump (22) are formed as conveying thread pumps, and
- wherein the output part (30b) comprises a first radial bearing (34) and a second radial bearing (35) and
- wherein the pump assembly (10) comprising exactly one axial bearing (36) for axially supporting the output part (30b).

2. The mechanical seal assembly according to claim 1, wherein the input part (30a) comprises the drive shaft (24) of the drive.

3. The mechanical seal assembly according to one of the preceding claims, wherein the first axial pump (21), the second axial pump (22) and the radial pump (23) are directly arranged at the output part (30b) of the magnet coupling.

4. The mechanical seal assembly according to one of the preceding claims, further comprising a one-piece pump housing (38), which includes an inlet (42) and an outlet (41).

5. The mechanical seal assembly according to claim 4, wherein an inlet direction into the inlet (42) is equal to an outlet direction into the outlet (41).

6. The mechanical seal assembly according to one of the preceding claims, furthermore comprising a fluid flow divider (43), which divides the fed fluid flow into two sub-flows (B1, B2), wherein the first sub-flow (B1) flows to the first axial pump (21) and the second sub-flow (B2) flows to the second axial pump (22).

7. The mechanical seal assembly according to one of the preceding claims, wherein the output part (30b) includes a rotary sleeve (39), where the first axial pump (21), the second axial pump (22), the radial pump (23) and the second permanent magnets (32) are arranged.

8. The mechanical seal assembly according to one of the preceding claims, furthermore comprising a control unit (12), which is adapted for controlling a drive speed of the drive (11), so as to determine a flow rate of the pump assembly (10).

9. The mechanical seal assembly according to one of the preceding claims, comprising a first mechanical seal (2a) and a second mechanical seal (2b), which are arranged in series, wherein a barrier medium is fed into a space (15) between the first and second mechanical seals.

## Revendications

1. Ensemble de garnitures mécaniques d'étanchéité, comprenant une garniture mécanique d'étanchéité (2a, 2b) avec un anneau de glissement rotatif (3) et un anneau de glissement stationnaire (4), lesquels définissent sur des surfaces de glissement se faisant face les unes les autres une fente d'étanchéité (5), et un circuit fluidique (7) avec un ensemble de pompage (10) pour amener un fluide à la garniture mécanique d'étanchéité (2a, 2b), comprenant :
- précisément un entraînement (11) avec un arbre d'entraînement (24),
- une première pompe axiale (21), laquelle refoule le fluide dans la direction axiale (X-X) de l'arbre d'entraînement,
- une deuxième pompe axiale (22), laquelle refoule le fluide dans la direction axiale de l'arbre d'entraînement, et
- une pompe radiale (23), laquelle refoule le fluide dans la direction radiale (R) de l'arbre d'entraînement,
- dans lequel la première pompe axiale (21) et la deuxième pompe axiale (22) sont disposées devant la pompe radiale (23) dans la direction de passage d'écoulement (B) du fluide à travers l'ensemble de pompage, et
- dans lequel l'entraînement (11) entraîne simultanément la première pompe axiale (21), la deuxième pompe axiale (22) et la pompe radiale (23), et
- comprenant en outre un couplage magnétique (30) avec une partie d'entraînement (30a) avec des premiers aimants permanents (31), un cylindre creux (33) immobile et une partie de sortie (30b) avec des deuxièmes aimants permanents (32),
- dans lequel les premiers aimants permanents (31) sont décalés d'une distance (A) par rapport aux deuxièmes aimants permanents (32) dans la direction axiale (X-X) de l'arbre d'entraînement (24), dans lequel les premiers aimants permanents chevauchent en partie les deuxièmes aimants permanents dans la direction radiale (R),
- dans lequel la première pompe axiale (21) refoule le fluide dans une première direction axiale (X1) et la deuxième pompe axiale (22) refoule le fluide dans une deuxième direction axiale (X2), laquelle est opposée à la première direction axiale (X1),
- dans lequel la première pompe axiale (21) et la deuxième pompe axiale (22) sont réalisées en tant que pompes à vis de refoulement, et
- dans lequel la partie de sortie (30b) comprend un premier palier radial (34) et un deuxième palier radial (35), et
- dans lequel l'ensemble de pompage (10) comprend précisément un palier axial (36) pour le support axial de la partie de sortie (30b).

2. Ensemble de garnitures mécaniques d'étanchéité selon la revendication 1, dans lequel la partie d'entraînement (30a) comprend l'arbre d'entraînement (24) de l'entraînement.

3. Ensemble de garnitures mécaniques d'étanchéité selon l'une quelconque des revendications précédentes, dans lequel la première pompe axiale (21), la deuxième pompe axiale (22) et la pompe radiale (23) sont disposées directement sur la partie de sortie (30b) du couplage magnétique.

4. Ensemble de garnitures mécaniques d'étanchéité selon l'une quelconque des revendications précédentes, comprenant en outre un carter de pompe (38) en une partie, lequel présente une arrivée (42) et une évacuation (41).

5. Ensemble de garnitures mécaniques d'étanchéité selon la revendication 4, dans lequel une direction d'arrivée dans l'arrivée (42) est identique à une direction d'évacuation dans l'évacuation (41).

6. Ensemble de garnitures mécaniques d'étanchéité selon l'une quelconque des revendications précédentes, comprenant en outre un diviseur de flux de fluide (43), lequel divise le flux de fluide amené en deux sous-flux (B1, B2), dans lequel le premier sous-flux (B1) s'écoule vers la première pompe axiale (21) et le deuxième sous-flux (B2) s'écoule vers la deuxième pompe axiale (22).

7. Ensemble de garnitures mécaniques d'étanchéité selon l'une quelconque des revendications précédentes, dans lequel la partie de sortie (30b) présente une douille de rotation (39), sur laquelle la première pompe axiale (21), la deuxième pompe axiale (22), la pompe radiale (23) et les deuxièmes aimants permanents (32) sont disposés.

8. Ensemble de garnitures mécaniques d'étanchéité selon l'une quelconque des revendications précédentes, comprenant en outre une unité de commande (12), laquelle est mise au point pour commander une vitesse de rotation d'entraînement de l'entraînement (11) pour définir ainsi une quantité de refoulement de l'ensemble de pompage (10).

9. Ensemble de garnitures mécaniques d'étanchéité selon l'une quelconque des revendications précédentes, comprenant une première garniture mécanique d'étanchéité (2a) et une deuxième garniture mécanique d'étanchéité (2b), lesquelles sont disposées en rangée, dans lequel un milieu de blocage est amené dans un espace (15) entre la première et la deuxième garniture mécanique d'étanchéité.
